**Europäisches Patentamt**

(19) **European Patent Office**

**Office européen des brevets**

(11) Numéro de publication : **0 321 522 B1**

(12) # FASCICULE DE BREVET EUROPEEN

(45) Date de publication du fascicule du brevet :
**11.09.91 Bulletin 91/37**

(51) Int. Cl.$^5$ : **C03B 9/38**, C03B 11/12

(21) Numéro de dépôt : **88905389.8**

(22) Date de dépôt : **13.06.88**

(86) Numéro de dépôt international :
**PCT/FR88/00300**

(87) Numéro de publication internationale :
**WO 88/10240 29.12.88 Gazette 88/28**

(54) **PROCEDE DE FABRICATION D'OBJETS EN VERRE COMPORTANT UNE ETAPE DE REFROIDISSEMENT.**

(30) Priorité : **19.06.87 FR 8708666**

(43) Date de publication de la demande :
**28.06.89 Bulletin 89/26**

(45) Mention de la délivrance du brevet :
**11.09.91 Bulletin 91/37**

(84) Etats contractants désignés :
**AT BE CH DE FR GB IT LI LU NL SE**

(56) Documents cités :
**EP-A- 0 110 695**
**EP-A- 0 125 022**
**EP-A- 0 149 890**
**EP-A- 0 163 618**
**US-A- 3 416 908**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur : **VIREY, Franck**
**14, rue Juge**
**F-75015 Paris (FR)**
Inventeur : **GOUMY, Daniel**
**13, bd de Jomardière**
**F-38120 Saint-Egrève (FR)**

(74) Mandataire : **Le Moenner, Gabriel et al**
**L'AIR LIQUIDE, Société Anonyme pour l'étude et l'exploitation des procédés Georges Claude**
**75, Quai d'Orsay**
**F-75321 Paris Cédex 07 (FR)**

## Description

La présente invention concerne un procédé de fabrication d'objets en verre comportant notamment une étape d'alimentation d'au moins un moule avec une goutte de verre à l'état visqueux, une étape de formation de l'objet dans le moule, une étape d'extraction et de transport de l'objet en verre, pendant laquelle l'objet en verre est encore à une température suffisamment élevée pour être susceptible de se déformer, suivie d'une étape de placement de l'objet en verre sur une surface de transfert.

Les machines de fabrication d'objets en verre tels que des bouteilles sont alimentées par une paraison de verre en fusion dont la viscosité est telle que cette paraison peut prendre sa forme finale dans un temps donné dépendant du cycle de fabrication. La paraison de verre arrive dans le moule à une température supérieure à la température de travail puis elle est conformée à l'intérieur du moule soit mécaniquement soit par soufflage, puis l'article en verre réalisé est extrait du moule par des moyens appropriés tels qu'une pince, dans les cas des bouteilles qui vient prendre la bouteille sous le rebord inférieur du goulot qui se refroidit plus rapidement que le reste de la bouteille. L'objet en verre est ensuite transporté (à l'aide la pince) vers une plaque d'attente au dessus de laquelle il s'immobilise. Cette plaque est perforée et l'on souffle de l'air de refroidissement, à température de l'atelier de fabrication, pour accélérer le refroidissement. Lorsque sa température est inférieure à la température de déformation du verre, l'objet est déposé sur la plaque d'attente puis placé sur un tapis de transfert qui transporte les articles dans un four de recuisson ou vers toute autre machine intermédiaire.

Pendant son formage, l'objet en verre est mis en contact avec un ou plusieurs moules pour être simultanément conformé et refroidi. Des problèmes apparaissent au niveau de l'objet conformé lorsque le verre lors de son contact avec le moule est trop refroidi ou lorsqu'il est refroidi trop vite ou trop inégalement ou également lorsqu'il n'est pas assez refroidi. On constate généralement qu'un refroidissement trop important ou inégal conduit à l'apparition d'ondulations sur la peau des articles en verre, tandis qu'un refroidissement trop rapide provoque l'apparition de glaçures, c'est-à-dire des amorces de fractures.

Enfin un refroidissement insuffisant est source de collage du verre sur les parois du moule et de déformation des articles en verre ainsi réalisés.

La Demanderesse a constaté que ces différents problèmes étaient dûs à un mauvais ajustement des principaux paramètres intervenant dans le refroidissement du verre, c'est-à-dire la température du ou des moules, la température du verre, les temps de contact verre-moule, et/ou la pression de contact verre-moule.

Le document EP-A-0275745, publié le 27.07.88 et ainsi appartenant à l'état de la technique visé à l'article 54, paragraphe 3 CBE décrit un procédé résolvant les problèmes de refroidissement du moule et de temps de contact verre-moule.

Le document EP-A-0163618 décrit par ailleurs l'injection, dans le moule contenant l'objet en verre, d'un gaz cryogénique.

Il est en effet apparu que le contrôle de la température du verre et par là même de la température des moules ainsi que le refroidissement de ceux-ci constituent des éléments essentiels si l'on veut éviter que se produisent des défauts sur les articles en verre au cours de leur formage.

Il est connu de l'article intitulé "Automatic control of mold cooling wind" publié dans le rapport de la "36th Annual Conference on Glass Problems", de réaliser un asservissement de la pression de l'air de refroidissement aux variations de la température de cet air. Ainsi, lorsque la température de l'air ambiant augmente en cours de journée, par exemple, on augmente la pression de l'air de refroidissement et donc le débit de celui-ci, tandis que lorsque la température ambiante diminue, par exemple l'hiver ou pendant la nuit, on diminue la pression d'air de refroidissement et donc le débit de celui-ci. D'après les résultats indiqués dans cet article, un tel procédé permet d'améliorer le refroidissement des moules en moyenne, au cours du temps, sans cependant permettre de résoudre le problème posé par les différentes perturbations citées plus haut. Dans la technique sus-mentionnée, l'air de refroidissement est généralement engendré à l'aide d'une puissante ventilation qui impose une circulation d'air à débit élevé autour de la machine de fabrication.

Le document US-A-3416908 décrit d'autre part un procédé permettant de s'affranchir des variations de température et d'humidité de l'air ambiant utilisé pour refroidir les moules et les surfaces d'attente et de transfert des objets en verre en maintenant les paramètres de l'air de refroidissement autour de valeurs moyennes, grâce à des échangeurs de refroidissement et/ou de chauffage.

En sus des problèmes rappelés ci-dessus, la Demanderesse a constaté l'existence de problèmes spécifiques liés à l'étape d'extraction et de transport de l'objet en verre.

La présente invention a pour objet de proposer un procédé permettant de refroidir plus rapidement et avec une bonne fiabilité, les objets en verre entre l'instant auquel ils sont extraits du moule et l'instant auquel ils peuvent être posés sur une surface telle qu'un tapis de transfert.

Dans ce but on projette dans le procédé précité, selon la présente invention, pendant une partie au moins de l'étape d'extraction et de transport de l'objet en verre, sur au moins une zone déterminée de l'objet en verre, un fluide à une température nettement inférieure à la température ambiante, le débit du fluide restant inférieur à une valeur limite à partir de laquelle on constate l'apparition de déformations de l'objet en verre.

Le fluide peut être un gaz froid obtenu à partir d'un liquide cryogénique soit pur, soit en mélange, dans des proportions variables, suivant la température visée, avec l'air ambiant. Le fluide peut être également un gaz froid obtenu par refroidissement dans un échangeur.

Le fluide peut également être un liquide cryogénique pulvérisé directement sur une partie choisie de l'objet en verre, afin de le refroidir plus rapidement. Cette dernière technique permet un refroidissement plus rapide de l'article, ce qui permet en particulier d'augmenter la productivité. L'utilisation de liquide cryogénique pulvérisé permet en outre, dans certains cas, de supprimer la ventilation, ce qui améliore le rendement énergétique de la machine, et contribue à la suppression des déformations de l'objet en verre. La projection de liquide cryogénique pulvérisé, tel que, notamment, l'azote et/ou l'anhydride carbonique peut être réalisée, en particulier, dans des conditions permettant de tremper l'objet en verre en totalité ou en partie, à l'extérieur et/ou à l'intérieur.

Le gaz froid ou le liquide peut être injecté pendant la totalité de cette étape ou pendant une partie seulement de celle-ci.

Deux périodes apparaissent particulièrement adaptées pour le traitement : la première correspond à l'étape de transfert de l'objet du moule final, tel que le moule finisseur, vers la plaque d'attente tandis que la seconde correspond à l'étape d'attente au dessus de la plaque (éventuellement sur celle-ci, avant transfert sur le tapis de transfert.

S'agissant de la première période, le traitement s'effectuera, lorsqu'on utilise un liquide cryogénique pulvérisé, ou éventuellement de l'air comprimé refroidi dans un échangeur ou par injection de liquide cryogénique, de préférence au niveau des pinces permettant le transport de l'objet.

Par exemple, dans le cas des bouteilles, ce traitement sera de préférence réalisé au niveau du goulot et de l'épaule de la bouteille, au voisinage de la pince de transfert.

S'agissant de la seconde période, le traitement s'effectuera de préférence au niveau de la face de l'objet en regard de la plaque d'attente. En particulier, dans le cas de bouteilles, ce traitement (à l'aide de liquide cryogénique pulvérisé ou d'air comprimé refroidi dans un échangeur ou par injection de liquide cryogénique) s'effectuera de préférence au niveau du fond de la bouteille, en particulier sur la surface portante annulaire de la bouteille (ou du gobelet) ainsi que sur les surfaces adjacentes, en particulier la surface cylindrique extérieure de la bouteille adjacente au fond.

Le gaz froid et/ou le mélange air-gaz froid peut être injecté et ventilé autour de l'objet en verre et peut avoir une température sensiblement constante. Au contraire, il peut être souhaitable dans certains cas d'abaisser progressivement la température du gaz pour ne pas provoquer de choc thermique trop important sur le verre. Dans d'autres cas, il est apparu souhaitable, au contraire, d'abaisser brutalement la température du gaz de ventilation, par exemple lorsque l'objet est au-dessus de la plaque d'attente, de manière à provoquer un trempe superficielle du dit objet, en particulier de la partie de celui-ci recevant initialement le gaz de ventilation, telle que la partie inférieure d'une bouteille sur laquelle celle-ci doit ensuite reposer sur le tapis de transfert et/ou la partie au voisinage du goulot et/ou de l'épaule de la bouteille.

Cette trempe superficielle permet en particulier de durcir rapidement la partie concernée de l'objet en verre et évite les déformations subséquentes de cet objet, ce qui améliore la tenue mécanique de l'objet (augmentation de la tenue de pression dans le cas de bouteilles).

Différentes variantes de réalisation de l'invention peuvent être envisagées, qui sont décrites ci-après.

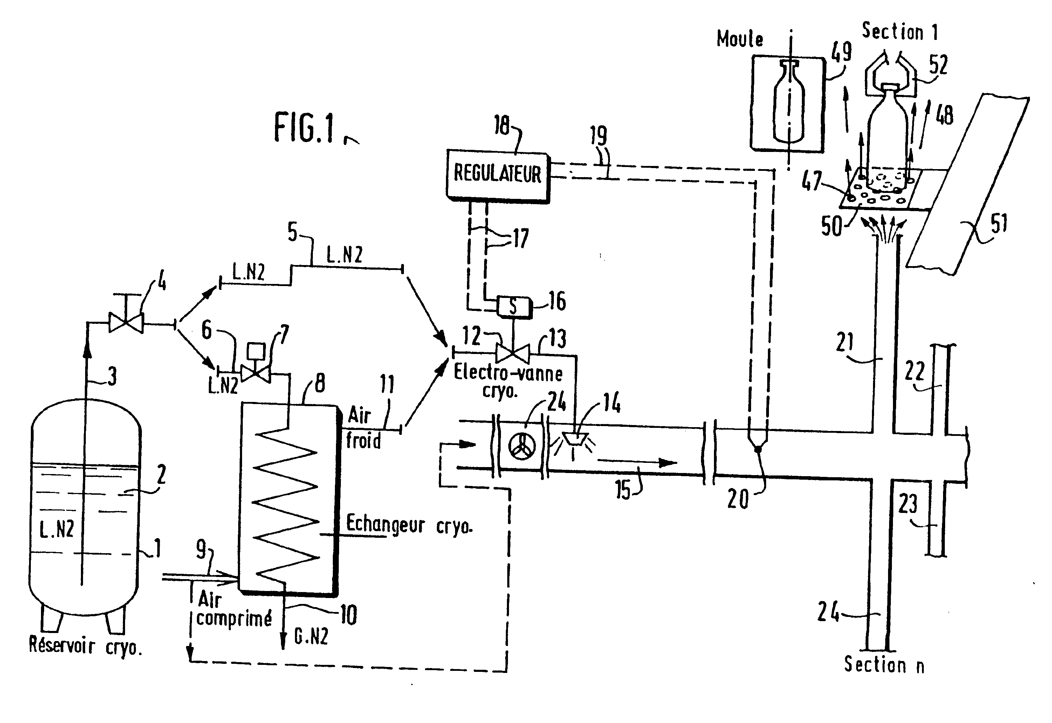

Une première variante consiste à injecter dans l'air de ventilation d'une machine ou d'une pluralité de machines, chaque machine comportant une pluralité de sections de moulage et/ou soufflage d'objets en verre, un liquide cryogénique tel que de l'azote liquide ou l'anhydride carbonique, ou un gaz froid tel que l'air refroidi dans un échangeur thermique ou un gaz froid tel que l'azote gazeux vaporisé à partir d'azote liquide, en amont du système de la pluralité de canalisations reliées chacune à une plaque d'attente. La température de l'air refroidi envoyé vers chaque objet est donc dans ce cas sensiblement la même (Fig. 1).

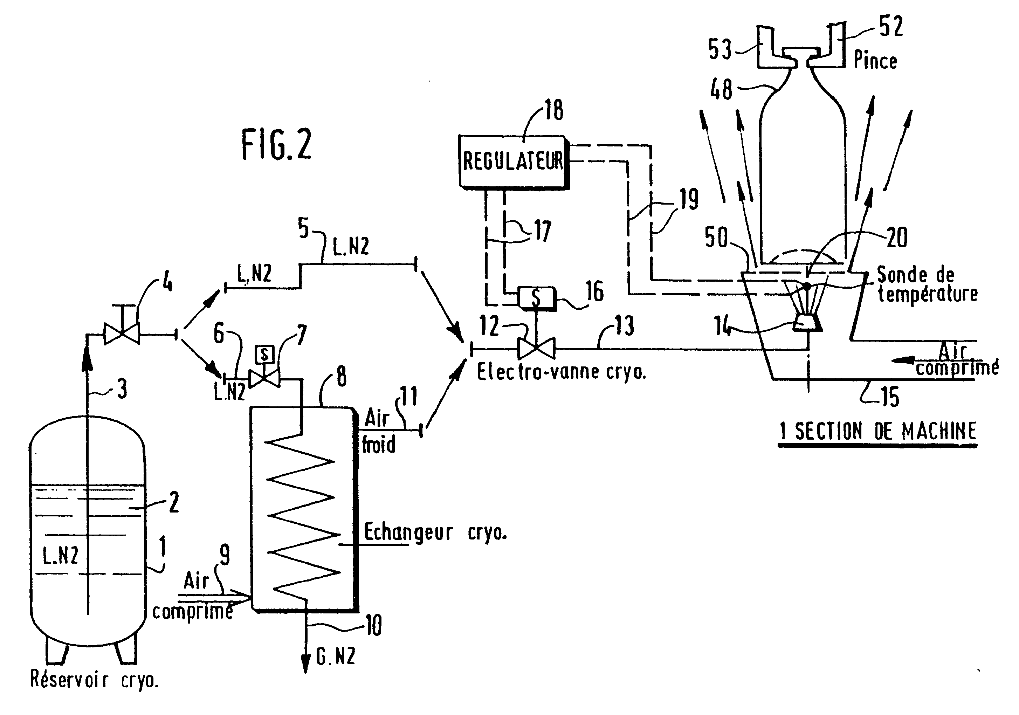

Une seconde variante consiste à refroidir l'air de ventilation au niveau de chaque plaque d'attente, c'est-à-dire au niveau de chaque section : l'air de ventilation est à température ambiante (ou refroidi comme ci-dessus) dans la canalisation d'arrivée d'air de ventilation d'une section et est refroidi au niveau de chaque plaque d'attente. La température de l'air de refroidissement peut ainsi être modulée section par section. Dans cette variante, la température de l'air de ventilation refroidi peut être mesurée, par exemple, sous la plaque, à proximité de la buse d'injection d'air ou de gaz froid éventuellement liquéfié (Fig. 2).

De préférence, l'injection de gaz froid, éventuellement liquéfié ou d'air refroidi se fera séquentiellement, en synchronisation avec l'arrivée d'un objet au voisinage de la plaque d'attente.

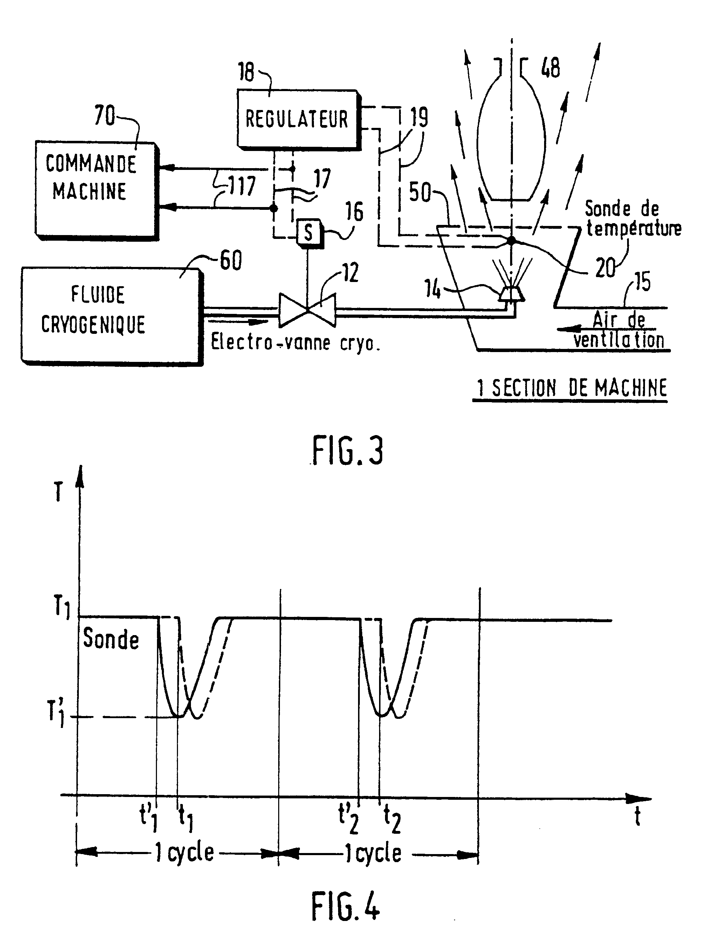

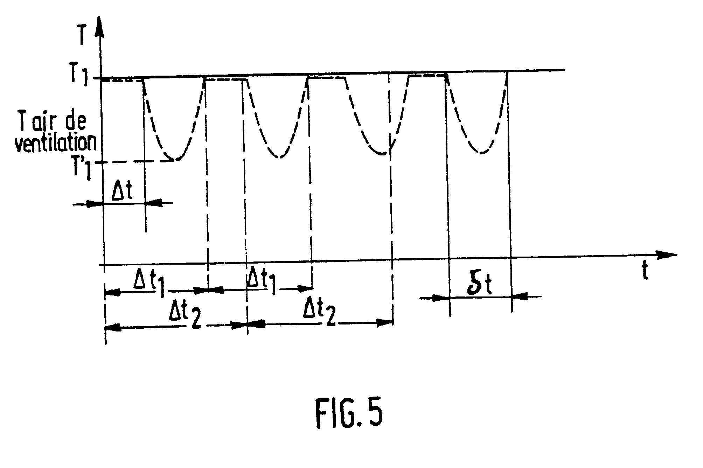

Cette injection séquentielle pourra légèrement anticiper, de préférence l'arrivée de l'objet de sorte que la température de l'air ventilé soit minimale lorsqu'arrive l'objet au dessus de la plaque d'attente (Fig. 3 et 4). Ainsi il sera possible, selon cette technique d'injection séquentielle modulée de diminuer le temps d'attente de chaque objet et ainsi augmenter la productivité de la machine (Fig. 5). En effet, il convient de noter que lorsque l'air de ventilation n'est pas refroidi, c'est la section ayant le plus mauvais rendement qui impose aux autres sections leurs temps de travail, donc le temps d'attente. Dans certains cas, certaines section pourraient travailler plus vite que d'autres car leur ventilation est plus efficace. Au contraire, avec le procédé selon l'invention, il suffit d'injecter plus de frigories aux sections les moins rapides pour les amener toutes à un temps de transport minimum de l'extraction à la pose sur le tapis de transfert, qui ne dépend que des caractéristiques physiques du verre et du gaz ventilé autour des objets.

Dans tous les cas on pourra coupler les refroidissements moule/plaque d'attente en utilisant de préférence le même module de refroidissement de l'air ventilé autour des moules et autour de la plaque d'attente. Mais il est aisé de comprendre qu'en utilisant une buse d'injection au niveau de chaque moule ou plaque d'attente, on peut moduler le refroidissement différemment pour chaque section et à l'intérieur de chaque section, selon l'une quelconque des modes de réalisation envisagés dans la demande française précitée associé à l'une quelconque des modes de la présente invention.

Selon une variante de réalisation de l'invention, on réalise la trempe superficielle d'une ou plusieurs parties situées sur l'un et/ou les deux faces de l'objet en verre entre l'instant où l'objet est prêt à sortir du moule (moule finisseur) et l'instant où l'objet est à une température adéquate pour être transféré sur le tapis de transfert.

Cette trempe superficielle comporte elle-même plusieurs variantes de réalisation qui peuvent être utilisées seules, de manière indépendantes les unes des autres, ou ensembles, soit simultanément, soit séquentiellement.

Une première variante a pour objet, comme c'est le cas pour les variantes précédemment décrites utilisant un gaz froid, d'éviter des déformations de l'article en verre à la sortie du moule finisseur. Afin d'obtenir un refroidissement rapide des zones susceptibles de se déformer, en particulier le goulot et/ou l'épaule d'une bouteille, sans déformation desdites zones résultant d'une augmentation du débit d'air de ventilation qui deviendrait alors trop important, on réalisera une pulvérisation de liquide cryogénique sur la zone à tremper superficiellement, telle que le goulot et/ou l'épaule. (Il est à noter que, selon le courant d'air de ventilation entourant l'objet en verre, la distance entre la buse de pulvérisation et l'objet, le débit de liquide cryogénique,..., ce dernier peut arriver sur la surface soit encore partiellement à l'état liquide ou solide, auquel cas une trempe est réalisée, soit à l'état de gaz qui selon sa température, réalisera une trempe ou un simple refroidissement. Voir ci-après les conditions généralement requises pour obtenir une trempe du verre).

Le matériel nécessaire à la mise en oeuvre de cette variante peut être constitué par un tore muni de trous, fentes, buses,...ledit tore étant solidaire des pinces manipulatrices de l'objet ou de la bouteille et venant se glisser, dans ce dernier cas, autour du goulot. La pulvérisation de liquide s'effectuera de préférence par séquences successives, par exemple dès que les pinces ont saisi l'article en verre, c'est-à-dire pendant sa phase de transfert du moule finisseur vers la plaque d'attente.

Cette pulvérisation séquentielle présente deux avantages : un premier avantage est une consommation minimale de fluide cryogénique (par rapport à une pulvérisation continue) tandis qu'un second avantage est la possibilité d'augmenter la cadence de production de la machine, c'est à dire diminuer le temps de séjour de la bouteille ou de l'objet en verre au-dessus de la plaque d'attente, temps de séjour qui est habituellement, selon l'art antérieur, de quelques secondes.

Une seconde variante de réalisation de la trempe a pour objet une augmentation des propriétés mécaniques du fond de l'article, sur sa surface extérieure, par une trempe cryogénique.

L'intérêt de cette trempe se justifie par une augmentation des propriétés mécaniques de la zone sensible de l'article en verre, celle soumise aux frottements lors du transport de l'objet du moule finisseur à l'étape d'emballage final. Cette zone sensible qui est celle sur laquelle s'appuie l'objet en verre est soumise, par lesdits frottements, aux amorces de rupture entrainant le rejet de l'objet en verre lors du contrôle final de la qualité dudit objet. Cette trempe permet donc d'augmenter la productivité de la machine, pour une cadence de production identique.

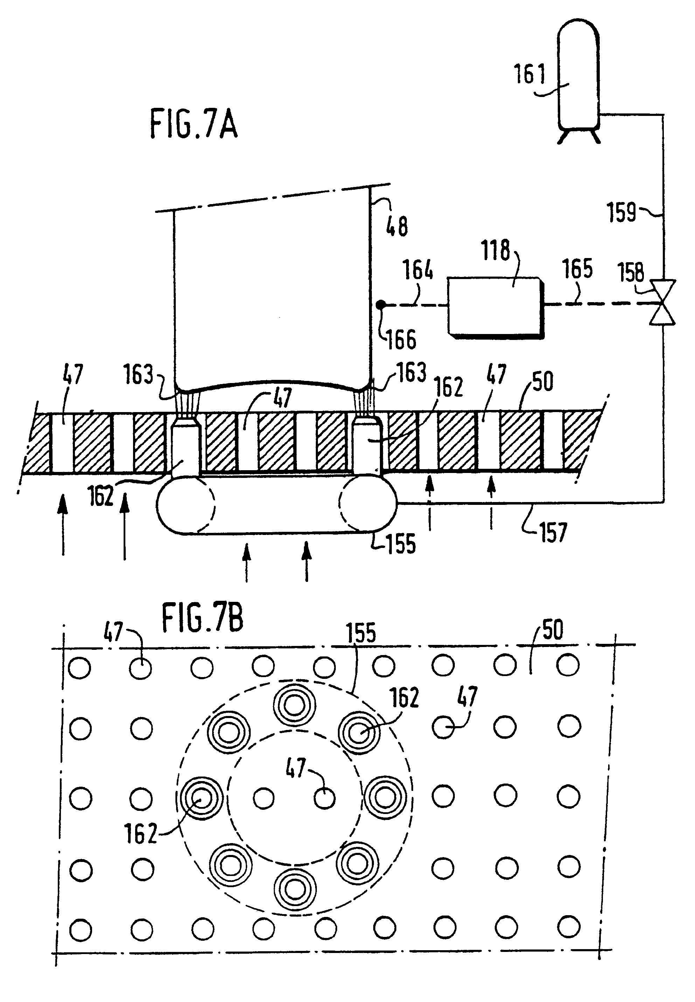

Une troisième variante de cette trempe superficielle consiste à projeter le liquide cryogénique (ou le solide dans le cas du $CO_2$ détendu sous forme de neige) sur l'ensemble des surfaces extérieures et/ou intérieures de l'objet en verre, en particulier une bouteille afin d'améliorer les propriétés mécaniques de celle-ci et/ou la productivité des machines de fabrication des bouteilles. L'appareil de mise en oeuvre consiste en un tore muni de fentes placé autour du col pour tremper la face extérieure de la bouteille, et une tige perforée, dont l'alimentation est couplée à celle du tore, introduite dans le goulot pour tremper l'intérieur de la bouteille. De préférence, cette trempe totale sera réalisée lorsque la bouteille est au dessus de la plaque d'attente, afin de tremper simultanément le fond de la bouteille (Fig. 7) : la trempe totale nécessite, généralement une trempe recto-verso simultanée des surfaces interne et externe de l'objet.

On a constaté que pour obtenir une couche de verre partiellement trempée (selon l'invention) c'est à dire pour obtenir une couche de verre trempé de l'ordre de 2 à 3 mm d'épaisseur, sur la partie souhaitée de l'article en verre, il était de préférable d'obtenir un coefficient d'échange H compris environ entre $1 \times 10^{-2}$ et $3 \times 10^{-2}$ Cal $\times$ cm$^{-2}$ $\times$ s$^{-1}$ $\times$ K$^{-1}$. Lorsque l'épaisseur de la couche trempée augmente, on constate une légère diminution de ce coefficient qui reste cependant d'un ordre de grandeur identique. Ces valeurs du coefficient H sont données pour des écarts de température entre le fluide cryogénique et le verre d'environ 850 K c'est à dire un objet en verre dont la température est d'environ 650°C lorsqu'on utilise de l'azote liquide (à − 196°C). Si l'on utilise de l'anhydride carbonique liquide (habituellement stocké à − 20°C, 20 bars) ce coefficient varie sensiblement entre $7 \times 10^{-3}$ et $2 \times 10^{-2}$ cal $\times$ cm$^{-2}$ $\times$ S$^{-1}$ $\times$ K$^{-1}$.

Lorsque le coefficient H est inférieur à la limite inférieure mentionnée ci-dessus, on constate que la trempe n'est pas obtenue tandis que lorsque le coefficient H est supérieur à la limite supérieure mentionnée ci-dessus, le choc est trop important et l'on obtient une destruction de l'objet en verre.

Bien entendu, les gaz liquéfiés utilisables pour cette trempe sont tous les gaz liquéfiés disponibles dans le commerce qui n'ont pas d'intéraction chimique avec le verre et qui n'ont pas d'autre intéraction physique avec le verre qu'un échange thermique, à moins qu'une autre intéraction physique soit également recherchée. On utilisera de préférence l'azote liquide ou l'anhydride carbonique liquide. Ce dernier, utilisable dans toutes les variantes du procédé selon l'invention, sera particulièrement avantageux pour la trempe. En effet, pendant la phase de pulvérisation du liquide cryogénique, la goutte de liquide vaporisé forme à proximité de la surface à refroidir une couche de gaz. (il en est de même d'une particule solide de neige carbonique).

Pour que la goutte de liquide ou la particule solide suivante puisse arriver au contact de cette même surface, il lui faut une énergie cinétique suffisante pour traverser ladite couche de gaz. Une telle énergie peut être obtenue à partir de la pression de stockage du réservoir.

Avec de l'azote liquide, on peut réaliser une trempe correcte dès que la pression de stockage dans le réservoir est supérieure ou égale à environ 2,5 bars en pression relative (3,5 bars absolus), les meilleurs résultats étant obtenue aux environs de 5 bars en pression relative. Une telle pression nécessite l'utilisation d'un réservoir cryogénique haute pression du type évaporateur ou bien la mise en place d'une pompe pour atteindre ces pressions. Ceci augmente les coûts de l'installation.

Dans le cas de l'anhydride carbonique, ces problèmes en général, n'existent pas. En effet, l'anhydride carbonique liquide est stocké généralement à − 20°C et 20 bars, ce qui est une pression suffisante pour que les particules de neige carbonique, formées par détente directe à pression et température ambiantes, aient l'énergie souhaitée.

Dans les deux cas, cependant, les consommations de fluide sont sensiblement identiques.

Le fluide froid sera de préférence choisi parmi les fluides cryogéniques tels que l'azote ou l'anhydride carbonique liquide ou parmi les gaz, tels que l'air, refroidis mécaniquement (par des moyens de réfrigération mécanique) ou par échange thermique avec un liquide cryogénique ou un gaz très froid dans un échangeur de chaleur, ou refroidis, à température inférieure à la température ambiante, par pulvérisation d'un liquide cryogénique dans le gaz de ventilation ou injection de gaz à température inférieure à celle du gaz ou de l'air de ventilation dans celui-ci.

L'invention sera mieux comprise à l'aide des exemples de réalisations suivants, donnés à titre non limitatifs conjointement avec les figures qui représentent :

— la figure 1, un exemple de mise en oeuvre de l'invention dans lequel on contrôle globalement la température de l'air de ventilation des plaques d'attentes,

— la figure 2, une seconde variante de réalisation de l'invention dans laquelle on contrôle la température de l'air de ventilation des plaques d'attente au niveau de chacune de celle-ci,

— la figure 3, une variante de réalisation particulièrement avantageuse de l'invention dans laquelle on fait varier la puissance frigorifique pendant la durée d'un cycle de transport d'un objet en verre,

— la figure 4, l'évolution dans le temps de la température de la sonde de température de l'air de ventilation dans la variante de réalisation de la figure 3,

— la figure 5, une autre variante de réalisation de la figure 4, correspondant à une augmentation des cadences de fabrication.

— la figure 6, représente une première variante de réalisation de la trempe, au niveau du goulot de la bouteille,

— la figure 7 représente une seconde variante de réalisation de la trempe, au niveau du fond de la bouteille.

Sur la figure 1, est représenté un exemple de réalisation de l'invention pour contrôler l'air de ventilation autour des objets en verre au niveau de la plaque d'attente. Sur cette figure, le réservoir cryogénique 1 contenant un liquide cryogénique 2 par exemple de l'azote liquide, est relié par la canalisation 3 et la vanne 4 soit, selon une première variante, par la canalisation 5 directement à l'électrovanne cryogénique 12, soit, selon une seconde variante, à l'électrovanne cryogénique 7 dont la sortie est reliée à un échangeur de chaleur 8 délivrant dans l'atmosphère à sa sortie inférieure (sur la figure) le gaz vaporisé, tandis que de l'air de ventilation 9, issu par exemple d'un générateur d'air comprimé, est introduit à la base de l'échangeur cryogénique 8 et s'échappe dans la partie supérieure de celui-ci par la canalisation 11 qui le conduit à l'électrovanne cryogénique 12. Celle-ci est reliée par la canalisation 13 à une buse de vaporisation 14 qui vaporise le gaz liquéfié ou injecte l'air refroidi (ou un autre gaz porteur de frigories) dans la canalisation 15 d'air de ventilation véhiculé par le ventilateur 24 situé en avant de la buse 14 et distribué dans une pluralité de canalisations 21, 22, 23, 24, etc..., chacune d'entre elles étant reliée à une plaque d'attente 50 d'une section de la machine de moulage (par section on entend dans les machines de ce type, l'ensemble des moules ébaucheur et finisseur).

La solution décrite sur cette figure 1 concerne la mise en oeuvre la plus simple de l'invention.

Dans la mise en oeuvre de cette solution, il existe deux possibilités. Selon une première possibilité, la totalité de l'air de ventilation d'une ou de plusieurs machines est traité dans un échangeur alimenté par un fluide cryogénique tel que l'azote liquide, l'hydrogène liquide, l'anhydride carbonique liquide, l'oxygène liquide, l'hélium liquide, l'argon liquide etc.... Selon cette première possibilité, la sonde de température 20 mesure la température de l'air de ventilation et le régulateur 18 commande alors l'ouverture ou la fermeture de la vanne 12 (via le dispositif de commande 16) afin d'injecter de l'air froid issu de l'échangeur 8 à une température prédéterminée. Les dimensions de cet échangeur seront adaptées au débit voulu. Une autre possibilité consiste à injecter un fluide cryogénique tel que l'azote liquide, l'anhydride carbonique liquide, l'hélium liquide, etc... dans la canalisation d'air de ventilation en amont de la ou des machines, la température étant maintenue par la mise en place d'une sonde de température en aval de l'injection, après homogénéisation du mélange, pilotant par le régulateur 18 et la vanne 16 les injections de fluides cryogéniques. La température est mesurée par la sonde de température 20 placée en un point quelconque approprié de la canalisation 15, à une distance plus ou moins grande de la buse d'injection 14, cette sonde de température étant reliée par les connexions 19 au régulateur 18 qui lorsque la température de l'air de ventilation de la canalisation 15 est supérieure à la température de consigne, engendre un signal sur les connexions électriques 17 pour commander l'ouverture de l'électrovanne cryogénique 12 par l'intermédiaire de son dispositif de commande 16. Le régulateur 18 peut fonctionner selon deux modes distincts : un premier mode consiste à mesurer à intervalles réguliers, par échantillonnage la température de l'air de ventilation dans la canalisation 15. Si celle-ci est inférieure ou égale à la température de consigne, aucun signal de commande n'est envoyé, de débit prédéterminé connu, pendant un intervalle de temps fixe, inférieur à la période de l'échantillonnage. Puis on commence à chaque mesure d'échantillonnage. Un second mode consiste à réaliser une mesure quasi-continue de la température de l'air de ventilation, par un échantillonnage à fréquence beaucoup plus élevée que dans le premier mode. Lorsque la température de l'air ventilé est supérieure à celle de la consigne, on ouvre la vanne cryogénique 12 qui débite le fluide adéquat jusqu'à ce que la température mesurée par la sonde 20 devienne inférieure ou égale à la valeur de consigne. La vanne cryogénique 12 est alors fermée.

Bien entendu, il est également possible de mettre en oeuvre des régulations de type "proportionnel" ou du type P.I.D. à l'aide de vannes adaptées, mais, ces solutions s'avèrent souvent trop coûteuses pour la rentabilité du procédé ou délicates de mise en oeuvre. Inversement, on peut également mettre en oeuvre des solutions beaucoup plus simple en utilisant une sonde de température 20, 120 du type bilame qui ouvre l'alimentation en courant électrique de l'électrovanne 12 lorsque la température mesurée est supérieure à la température de consigne, ce qui commande l'ouverture de la vanne cryogénique 12, et coupe l'alimentation électrique de l'électrovanne 12 lorsque la température mesurée est inférieure ou égale à la température de consigne, ce qui commande la fermeture de l'électrovanne 12.

Sur la figure 2 est représentée une variante de réalisation de l'invention qui peut être utilisée seule ou en combinaison avec la variante de réalisation de la figure 1. Sur cette figure 2, les mêmes éléments que ceux de la figure 1 portent les mêmes références. L'air froid issu de l'échangeur cryogénique 8 ou le gaz liquéfié arrivant par la canalisation 5, traverse l'électrovanne cryogénique 12 sous la commande du régulateur 18 qui reçoit une information de température par la sonde de température 20 qui est placée dans le cas présent à proximité de la buse d'injection cryogénique 14 elle même placée dans la canalisation d'amenée d'air de ventilation aux plaques d'attentes perforées, juste en dessous ou à proximité de cette plaque d'attente. La sonde de température 20 est également à proximité de la buse d'injection 14, de préférence entre la buse et la plaque d'attente 50.

Le fait de contrôler le niveau de température de la totalité de l'air de ventilation au cours du temps tel qu'exposé en regard de la figure 1 permet d'augmenter le rendement de la machine. Cependant dans certain cas, on retrouve au niveau de chaque section d'une machine des écarts de température au niveau des plaques d'attente dûs par exemple à des variations de perte de charge (longueurs de canalisation différentes, etc...), là où les sections travaillant en de moins bonnes conditions vont diminuer le rendement de la machine. La variante de réalisation exposée sur cette figure 2 permet de contrôler la température au niveau de chaque plaque d'attente c'est-à-dire au niveau de chaque section d'une machine.

Selon une possibilité de cette variante on peut injecter un fluide cryogénique tel que l'azote liquide, l'anhydride carbonique liquide, l'hélium liquide, etc... dans le circuit d'air de ventilation juste en amont de la plaque d'attente, la sonde température placée à proximité de l'injection cryogénique, après homogéinisation de la température, pilotant, par l'intermédiaire du régulateur 18, les cycles d'ouverture et de fermeture de la vanne cryogénique 12.

Le complément frigorifique nécessaire peut être obtenu en injectant un gaz, par exemple de l'air, préalablement refroidi dans un échangeur cryogénique alimenté par un fluide tel que l'azote liquide, l'argon liquide, l'anhydride carbonique liquide, l'oxygène liquide, l'hydrogène liquide, l'hélium liquide etc.... Le contrôle de la température se fera de la même manière que celle décrite ci-dessus. Une telle solution présente l'avantage de pouvoir utiliser un fluide de refroidissement tel que l'oxygène ou l'hydrogène.

Les figures 3 et 4 permettent d'expliciter une variante particulièrement avantageuse de l'invention, selon laquelle on peut programmer la puissance frigorifique injectée dans l'air de ventilation juste au dessus de la plaque d'attente afin d'améliorer la productivité et la qualité de l'article de verre réalisé. Sur ces figures, les mêmes éléments que ceux des figures précédentes portent les mêmes référence. Le fluide cryogénique ou l'air refroidi sont créés de la même façon que précédemment par l'ensemble représenté par la référence 60. Dans cet exemple de réalisation, la sonde de température est placée comme dans le cas de la figure 2 à proximité de la buse d'injection 14 de fluide cryognénique ou d'air refroidi, en dessous de la plaque d'attente 50. Les lignes électriques 17 de connexion du régulateur aux moyens de commande 16 et l'électrovanne cryogénique 12 sont reliées également aux lignes électriques 117 qui sont connectées à des moyens de commande de la machine de production 70. Le fonctionnement des dispositifs de la figure 4 sera mieux compris à l'aide de la figure 5 sur laquelle sont représentées les variations de la température T1, mesurée par la sonde 20.

Selon une première variante de réalisation, les moyens de commande machine 70 déclenchent lors de l'arrivée de l'objet en verre au dessus de la plaque d'attente à l'instant t1, l'ouverture de l'électrovanne cryogénique 12 ce qui permet l'injection d'une quantité prédéterminée de fluide cryogénique ou de gaz froid par la buse 14, ce qui fait chuter la température de la sonde de la valeur T1 à la valeur T'1, nettement inférieure (de l'ordre d'environ 50°C à 150°C). Plus l'écart de température est important, plus on abaisse rapidement la température. Puis la température de la sonde remonte rapidement à la valeur T1.

Selon une seconde variante préférentielle de réalisation de cet exemple de la figure 3, on anticipe l'arrivée de l'objet en verre 40 au dessus de la plaque d'attente 50 en injectant à l'instant t'1, antérieur à l'instant t1 du liquide cryogénique ou de l'air froid par la buse 14, l'électrovanne cryogénique 12 ayant son ouverture commandée par les moyens de commandes machine 70. Comme précédemment, on injecte une quantité prédéterminée de liquide cryogénique ou de gaz froid. En pratique, ceci signifie que l'on ouvre l'électrovanne cryogénique pendant un intervalle de temps prédéterminé, afin de délivrer une quantité prédéterminée de frigories.

L'instant t1 peut correspondre à l'instant d'arrivée de l'objet en verre au dessus de la plaque d'attente (selon la variante en pointillés sur la figure 4) mais il peut également être antérieur (t'1), permettant ainsi de tenir compte des constantes de temps dûes à la nature des matériaux en présence (verre-air de ventilation).

Cette fonction est réalisée sur la figure 3 par une seule vanne 12 mais dans un certains cas il sera nécessaire de séparer les différentes fonctions à l'aide de plusieurs vannes. Bien entendu, le dispositif de la figure 4 est identique pour chaque section de la machine, avec un décalage dans le temps de la commande.

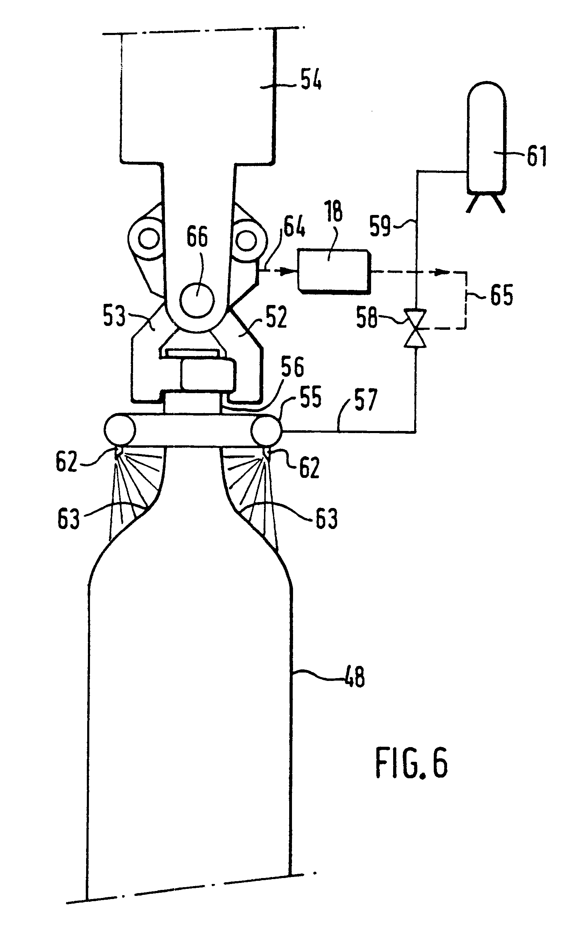

Sur la figure 4, l'injection de fluide cryogénique permet de refroidir plus rapidement l'objet en verre. Cependant, sur cette figure, on s'est contenté de refroidir plus rapidement l'objet sans en tirer profit pour augmenter les cadences de fabrication comme cela va être explicité à l'aide de la Figure 6.

Sur la figure 5, $t_2$ représente la durée d'un cycle selon l'art antérieur. Selon l'invention, dès la remontée de la température de l'air de ventilation à la valeur $T_1$, la quantité de frigories doit avoir été suffisante pour que l'objet en verre puisse immédiatement être transféré sur le tapis de transfert. Ainsi un cycle peut avoir une durée $t_1$, nettement plus courte que $t_2$. Dans cet intervalle de temps $t_1$, t représente environ le temps de transfert de l'objet en verre du moule vers la table d'attente, tandis que St représente sensiblement le temps de présence de l'objet en verre au dessus de la plaque d'attente.

Bien entendu, il conviendra d'ajuster, dans chaque cas particulier, le moment adéquat d'injection du gaz froid ou du liquide cryogénique en fonction de l'instant d'arrivée de l'objet en verre au dessus de la plaque d'attente. Généralement, l'injection sera légèrement anticipée afin de gagner du temps donc d'augmenter la productivité de la machine.

La figure 6 représente une première variante de réalisation de dispositif de mise en oeuvre de procédé de refroidissement ou de trempe selon l'invention. La pince 54 comporte deux bras 52 et 53, mobiles autour de l'axe 66 solidaire du support de pince 54. Les bras s'ouvrent et se ferment alternativement pour lâcher le goulot 56 d'une bouteille 48 et venir prendre le goulot 56 d'une autre bouteille, respectivement, tandis que cette dernière est transportée à l'aide de la pince du moule finisseur à la plaque d'attente 50 puis au tapis de transfert 51.

Un moyen de vaporisation de liquide cryogénique, ayant ici la forme d'un tore 55 solidaire du support 54, par un moyen non représenté sur la figure. Ce tore vient se placer autour du goulot de la bouteille. Dans ce but, il est généralement d'une seule pièce et vient entourer le goulot par un mouvement d'abaissement de la pince de haut en bas, lorsque les bras viennent enserrer la partie supérieure du goulot. Selon une variante, le tore 55 peut être constitué de deux demi-tores, chacun solidaire ou synchronisé avec les bras 52, 53 de la pince, éventuellement articulés à l'une de leurs extrémités, de formes telles que les deux moitiés soient adjacentes lorsque la pince est fermée autour du goulot. Régulièrement disposées le long d'axes sensiblement perpendiculaires au plan médian du tore (donc sensiblement verticalement lorsque le tore est horizontal comme sur la figure) sont réparties des ouvertures, fentes ou buses 62 de pulvérisation du liquide cryogénique.

Celles-ci auront une géométrie et une orientation telles que le jet de liquide pulvérisé se répartisse, de préférence sensiblement uniformément sur toute l'épaule 63 de la bouteille, comme représenté sur la figure (sur laquelle le jet est compris dans une enveloppe cônique d'environ 90° au sommet mais différents angles au sommet sont possibles).

Le diamètre du tore sera de l'ordre du diamètre de la bouteille ou légèrement inférieur, tandis que le diamètre d'une section circulaire du tore sera suffisant pour assurer le débit du fluide voulu tout en laissant une ouverture suffisante au centre pour le passage du goulot.

Le tore 55 est alimenté par une ou plusieurs canalisations 57 (une seule sur la figure) reliées au réservoir 61 de liquide cryogénique par l'intermédiaire de la vanne 58. Cette vanne est commandée par un régulateur 18 via la ligne de commande 65, la régulateur étant lui-même relié par la ligne 64 à la pince 54 de manière à synchroniser l'injection de fluide cryogénique avec l'intervalle de temps pendant lequel la pince est fermée, c'est à dire tient entre ses bras une bouteille 48. Cette injection peut être légèrement anticipée, par exemple dès l'amorce de fermeture des bras ou dès l'arrivée du tore au niveau du goulot.

De préférence, cette injection débutera lorsque la pince est fermée.

La durée de cette injection sera variable, mais la plus courte possible afin de réduire au minimum le coût du procédé. Elle terminera au plus tard lorsque la pince s'ouvre pour relacher l'objet en verre.

La synchronisation de l'injection avec le mouvement de la pince ainsi que la durée de l'injection sont commandées par le régulateur 18, connu en soi, qui fait partie de la machine de fabrication des objets en verre. On lui ajoutera, en série, si nécessaire, un moyen connu commandant l'ouverture et la fermeture régulière de la vanne 58, de manière à créer des injections séquentielles de fluide cryogénique.

La figure 7 représente la variante de réalisation de la trempe du fond de la bouteille. La figure 7a est vue partiellement en coupe et partiellement schématique illustrant le procédé et le dispositif de mise en oeuvre. La plaque d'attente 50 est percée, de manière connue en soi, d'une pluralité d'orifices 47 régulièrement répartis, destinés au passage de l'air de refroidissement, schématisé par les flèches dirigées vers le haut sur figure.

Un tore 155 (de caractéristiques identiques au tore 55 voir description ci-dessus) de distribution de fluide cryogénique est placé sous la plaque 50. Il est muni d'une pluralité de buses 162, régulièrement réparties à sa périphérie supérieure, qui viennent se loger dans les orifices 47 et débouchent sensiblement au niveau supérieur de la plaque d'attente (légèrement en dessous de ce niveau). Ces buses sont disposées régulièrement selon sensiblement la circonférence 163 sur laquelle l'objet en verre (ici la bouteille) viendra ensuite reposer notamment sur le tapis de transfert. Suivant le type d'objets fabriqués, il est aisé de changer de tore 155 pour en adapter les dimensions à celles de l'objet fabriqué (dans le cas de la figure 6, on choisit en général un tore dont le diamètre conviendra pour tous les goulots de bouteilles, mais on peut également envisager un changement de tore). Cette disposition des buses 162 dans les ouvertures telles que 47 (ou de diamètre supérieur) est vue de dessus sur la figure 7B. On s'arrangera pour que le liquide cryogénique, soit du fait du diamètre du tore, soit de l'orientation des buses, atteigne le fond de la bouteille mais également la base de la paroi latérale de la bouteille, comme illustré sur la figure 7.

Le tore 155 est relié, via l'electro-vanne cryogénique 158 au réservoir de fluide cryogénique 161.

L'électrovanne est commandée par un ensemble électronique 118 (automate de la machine), d'un type semblable à 18 sur la figure 6, qui va contrôler les instants d'ouverture et de fermeture de la vanne 158 ainsi que la durée de l'ouverture (ouverture continue ou en séquences successives).

La commande de l'électrovanne peut être reliée à un détecteur de présence 166 de l'objet en verre pour détecter lorsque ledit objet 48 est en position correcte au dessus du tore 155.

On règlera la durée (continue ou séquentielle) de l'injection du fluide cryogénique par l'automate de la machine et le débit par le diamètre des buses 162 de manière à minimiser la consommation dudit fluide. On pourra ainsi généralement, par de simples essais de routine, améliorer la résistance mécanique du fond de l'objet, mais également diminuer le temps d'attente de la bouteille au dessus de la plaque d'attente et ainsi augmenter à la fois la productivité et les cadences de fabrication. Il est également possible d'envisager, sans sortir du cadre de l'invention, un traitement de trempe du fond de la bouteille lors du transfert de celle-ci du moule finisseur à la plaque d'attente, par exemple, à l'aide d'un tube mobile avec la bouteille (ou tout dispositif analogue). Ainsi les deux traitements, quelles que soient les variantes utilisées, peuvent être simultanés ou séquentiels.

Lorsqu'on veut réaliser une trempe totale de la surface extérieure de la bouteille, on associera, par exemple, des dispositifs des figures 6 (modifié) et 7 (non modifié). Le dispositif de la figure 6 sera modifié en ce que le diamètre du tore 55 et celui des buses ou ouvertures (fentes) 62 seront tels que l'ensemble de la surface latérale de la bouteille pourra recevoir la pulvérisation de liquide ou de solide. Le dispositif de la figure 7 ne sera pratiquement pas modifié, si ce n'est l'angle de pulvérisation des buses 162, permettant d'atteindre la partie centrale du fond de la bouteille. Eventuellement, on pourra rajouter des buses dans les ouvertures centrales 47 (figure. 7B).

Pour la trempe (généralement simultanée) interne de la bouteille, un simple tube cylindrique fermé à son extrémité inférieure, et muni d'ouvertures ou de fentes conviendra généralement. Ces ouvertures seront de préférence régulièrement réparties sur toute la hauteur du tube, de manière à réaliser une pulvérisation uniforme de la surface interne de la bouteille. Une ou plusieurs ouvertures (ou buses) placées vers l'extrémité inférieure du tube permettant une projection sur le fond interne de la bouteille.

## Revendications

1. Procédé de fabrication d'objets en verre comportant, notamment, une étape d'alimentation d'au moins un moule (49) avec une goutte de verre à l'état de liquide visqueux, une étape de formation de l'objet dans le moule, une étape d'extraction et de transport de l'objet en verre (48) pendant laquelle l'objet en verre est encore à une température suffisamment élevée pour être susceptible de se déformer, suivie d'une étape de placement de l'objet en verre sur une surface de transfert (50, 51), caractérisé en ce que, pendant une partie au moins de l'étape d'extraction et de transport de l'objet en verre, on projette sur au moins une zone déterminée (56, 163) de l'objet en verre (48), un fluide à une température nettement inférieure à la température ambiante, le débit du fluide restant inférieur à une valeur limite à partir de laquelle on constate l'apparition de déformations de l'objet en verre.

2. Procédé selon la revendication 1, caractérisé en ce que l'étape d'extraction et de transport de l'objet en verre (48) comporte une étape d'attente durant laquelle on attend qu'au moins la peau extérieure de l'objet en verre prenne une température suffisamment basse pour pouvoir ensuite placer l'objet en verre sur la surface de transfert (50, 51) et en ce que l'on projette le fluide sur l'objet en verre pendant l'étape d'attente.

3. Procédé selon la revendication 1 ou 2, caractérisé en ce qu'il comporte une étape de projection du fluide sur la base (163) de l'objet en verre (48).

4. Procédé selon l'une des revendications 1 à 3, caractérisé en ce qu'il comporte une étape de projection du fluide sur la partie supérieure de l'objet en verre (48) telle que le col (56) d'une bouteille.

5. Procédé selon l'une des revendications 1 ou 2, caractérisé en ce qu'il comporte une étape de projection du fluide sur l'ensemble de l'objet en verre (48).

6. Procédé selon l'une des revendications 1 à 5, caractérisé en ce que l'objet en verre est un corps creux du type bouteille (48) et en ce qu'il comporte également une étape de projection du fluide sur une face interne du corps creux.

7. Procédé selon la revendication 6, caractérisé en ce que l'étape de projection interne du fluide est réalisée simultanément avec une au moins des étapes de projection de fluide sur la face externe du corps creux (48).

8. Procédé selon la revendication 6 ou 7, caractérisé en ce que l'étape de projection interne de fluide est réalisée avant ou après au moins une des étapes de projection de fluide sur la face externe du corps creux (48).

9. Procédé selon l'une des revendications 1 à 8, caractérisé en ce que la température du fluide est suffisamment basse pour qu'au moins la zone déterminée (56, 163) de l'objet en verre (48) subisse une trempe superficielle.

10. Procédé selon l'une des revendications 1 à 9, caractérisé en ce qu'il comporte une étape de projection du fluide vers la partie (163) de l'objet en verre sur laquelle celui-ci est destiné à reposer ultérieurement sur la surface de transfert.

11. Procédé selon l'une des revendications 1 à 10, caractérisé en ce que le fluide est un gaz, tel que de l'air, à une température nettement inférieure à la température ambiante ou un mélange de gaz et de liquide cryogénique pulvérisé.

12. Procédé selon l'une des revendications 1 à 10, caractérisé en ce que le fluide est un liquide cryogénique (2) que l'on pulvérise (14) lors de l'étape de projection de manière à former une pluralité de gouttes de liquide ou de solide, qui restent au moins partiellement en phase liquide ou solide, respectivement, avant d'atteindre la surface de l'objet en verre (48).

13. Procédé selon la revendication 11, caractérisé en ce que le fluide est de l'air prélevé d'une source de gaz comprimé (9) et que l'on met en contact d'échange thermique avec un fluide cryogénique (2) de manière à abaisser sa température jusqu'à une température de consigne, constante ou variable au cours d'un cycle, constante ou variable en moyenne dans le temps sur un grand nombre de cycles.

14. Procédé selon la revendication 13, caractérisé en ce que la mise en contact s'effectue par passage de l'air comprimé dans des moyens échangeurs de chaleur (8).

15. Procédé suivant la revendication 13, caractérisé en ce que la mise en contact se fait par injection (14) de gaz froid dans l'air comprimé, de manière continue et/ou séquentielle.

16. Procédé selon la revendication 13, caractérisé en ce que la mise en contact s'effectue par injection (14) de fluide cryogénique (2) dans l'air comprimé, de manière continue ou séquentielle.

17. Procédé selon l'une des revendications 13 ou 16, caractérisé en ce que l'on refroidit l'air comprimé de l'ensemble des sections d'une machine à la même température.

18. Procédé selon l'une des revendications 13 à 17, caractérisé en ce que l'air comprimé est amené autour et/ou sous au moins une table d'attente (50) par des canalisations séparées (15), en ce que l'on mesure la température (20) au voisinage de la table d'attente, en ce que l'on compare la température mesurée à la température de consigne et en ce que l'on injecte, si nécessaire, un fluide de refroidissement dans l'air comprimé au niveau de chaque canalisation (15).

19. Procédé selon la revendication 18, caractérisé en ce que les températures de consigne au niveau de chaque moule (49) ou ensemble de moules sont identiques.

20. Procédé selon la revendication 18, caractérisé en ce que les températures de consigne au niveau de chaque moule (49) ou ensemble de moules sont différentes.

21. Procédé selon l'une des revendications 18 à 20, caractérisé en ce que la mesure de température (20) s'effectue en mesurant la température de l'air comprimé juste avant son injection autour et/ou sous la table d'attente (50).

22. Procédé selon l'une des revendications 18 à 20, caractérisé en ce que la mesure de la température (20) s'effectue en mesurant la température de l'air comprimé au dessus de la table d'attente (50).

23. Procédé selon l'une des revendications 13 à 22, caractérisé en ce que la température de l'air comprimé refroidi est maintenue sensiblement constante dans le temps.

24. Procédé selon l'une des revendications 13 à 22, caractérisé en ce que la température de l'air comprimé n'est abaissée qu'entre sensiblement l'instant où arrive l'objet en verre (48) au dessus de la table d'attente (50) et l'instant où il quitte cette position.

25. Procédé selon l'une des revendications 13 à 24, caractérisé en ce que l'air comprimé est refroidi quelques instants avant l'arrivé de l'objet en verre (48) au dessus de la table d'attente (50).

## Patentansprüche

1. Verfahren zum Herstellen von Glasgegenständen mit insbesondere einer Stufe zur Versorgung mindestens einer Gießform (49) mit einem Glastropfen in dickflüssigem Zustand, einer Stufe zur Bildung des Gegenstandes in der Gießform, einer Stufe für das Abziehen und den Transport des Glasgegenstandes (48), während welchem der Glasgegenstand sich noch auf einer ausreichend hohen Temperatur befindet, bei welcher der Glasgegenstand geeignet ist, sich zu verformen, und dann mit einer Stufe, bei welcher der Glasgegenstand auf eine Transportoberfläche (50, 51) gebracht wird, dadurch gekennzeichnet, daß während mindestens eines Teils der Stufe zum Abziehen und Transportieren des Glasgegenstandes auf mindestens eine bestimmte Zone (56, 163) des Glasgegenstandes (48) ein Fließmittel mit einer Temperatur deutlich unter der Umgebungstemperatur geworfen wird, wobei der Durchsatz des Fließmittels unter einem Grenzwert bleibt, von dem an man die Erscheinung der Verformung des Glasgegenstandes feststellt.

2. Verfahren nach Anspruch 1, dadurch gekennzeichnet, daß die Stufe für das Abziehen und den Transport des Glasgegenstandes (48) eine Wartestufe aufweist, während der man wartet, bis mindestens die äußere Haut des Glasgegenstandes eine Temperatur annimmt, die ausreichend niedrig ist, um anschließend den Glasgegenstand auf die Transportfläche (50, 51) bringen zu können, und daß man das Fließmittel während der Wartestufe auf den Glasgegenstand wirft.

3. Verfahren nach Anspruch 1 oder 2, dadurch gekennzeichnet, daß es eine Stufe zum Aufwerfen des Fließmittels auf die Basis (163) des Glasgegenstandes (48) aufweist.

4. Verfahren nach einem der Ansprüche 1 bis 3, dadurch gekennzeichnet, daß es eine Stufe zum Aufwerfen des Fließmittels auf den oberen Teil des Glasgegenstandes (48), wie z.B. der Hals (56) einer Flasche, aufweist.

5. Verfahren nach einem der Ansprüche 1 oder 2, dadurch gekennzeichnet, daß es eine Stufe aufweist zum Aufwerfen von Fließmittel auf die Gesamtheit des Glasgegenstandes (48).

6. Verfahren nach einem der Ansprüche 1 bis 5, dadurch gekennzeichnet, daß der Glasgegenstand ein hohler Körper vom Flaschentyp (48) ist und daß es auch eine Stufe aufweist zum Aufwerfen von Fließmittel auf eine innere Oberfläche des hohlen Körpers.

7. Verfahren nach Anspruch 6, dadurch gekennzeichnet, daß die Stufe zum inneren Aufwerfen des Fließmittels gleichzeitig mit mindestens einer der Stufen zum Aufwerfen von Fließmittel auf die Außenfläche des hohlen Körpers (48) durchgeführt wird.

8. Verfahren nach Anspruch 6 oder 7, dadurch gekennzeichnet, daß die Stufe des inneren Aufwerfens von Fließmittel vor oder nach mindestens einer der Stufen zum Aufwerfen von Fließmittel auf die Außenfläche des hohlen Körpers (48) durchgeführt wird.

9. Verfahren nach einem der Ansprüche 1 bis 8, dadurch gekennzeichnet, daß die Temperatur des Fließmittels ausreichend niedrig ist, damit mindestens die bestimmte Zone (56, 163) des Glasgegenstandes (4 8) einem oberflächlichen Abschrecken unterworfen wird.

10. Verfahren nach einem der Ansprüche 1 bis 9, dadurch gekennzeichnet, daß es eine Stufe zum Aufwerfen von Fließmittel gegen denjenigen Teil (163) des Glasgegenstandes aufweist, auf welchem der Glasgegenstand dazu bestimmt ist, später auf der Transportfläche zu ruhen.

11. Verfahren nach einem der Ansprüche 1 bis 10, dadurch gekennzeichnet, daß das Fließmittel ein Gas ist, wie z.B. Luft, mit einer Temperatur deutlich unter der Umgebungstemperatur oder ein Gemisch von Gas und pulverisierter Tiefsttemperaturflüssigkeit.

12. Verfahren nach einem der Ansprüche 1 bis 10, dadurch gekennzeichnet, daß das Fließmittel eine Tiefsttemperaturflüssigkeit (2) ist, die man während der Stufe des Aufwerfens derart pulverisiert (14), daß eine Vielzahl von flüssigen oder festen Tropfen gebildet wird, die mindestens teilweise in flüssiger bzw. fester Phase bleiben, bevor sie die Oberfläche des Glasgegenstandes (48) erreichen.

13. Verfahren nach Anspruch 11, dadurch gekennzeichnet, daß das Fließmittel aus Luft besteht, die aus einer Quelle für komprimiertes Gas (9) abgezogen ist, und daß man sie mit einem Tiefsttemperaturfließmittel (2) in Wärmeaustauschberührung derart bringt, daß seine Temperatur bis auf eine Solltemperatur absinkt, die im Verlaufe eines Zyklus konstant oder variabel ist, konstant oder variabel im Mittel während des Zeitabschnittes einer großen Anzahl von Zyklen.

14. Verfahren nach Anspruch 13, dadurch gekennzeichnet, daß das Inkontaktbringen durch den Durchgang von komprimierter Luft in Wärmetauschermitteln (8) erfolgt.

15. Verfahren nach Anspruch 13, dadurch gekennzeichnet, daß das Inkontaktbringen durch Einspritzen (14) von kaltem Gas in komprimierte Luft in kontinuierlicher und/oder sequentieller Weise erfolgt.

16. Verfahren nach Anspruch 13, dadurch gekennzeichnet, daß das Inkontaktbringen durch Einspritzen (14) von Tiefsttemperaturfließmittel (2) in komprimierte Luft in kontinuierlicher oder sequentieller Weise erfolgt.

17. Verfahren nach einem der Ansprüche 13 oder 16, dadurch gekennzeichnet, daß man die komprimierte Luft der Gesamtheit der Abschnitte einer Maschine auf dieselbe Temperatur abkühlt.

18. Verfahren nach einem der Ansprüche 13 bis 17, dadurch gekennzeichnet, daß die komprimierte Luft um und/oder unter mindestens einen Wartetisch (50) durch getrennte Leitungen (15) geführt wird, daß man die Temperatur (20) in der Nachbarschaft des Wartetisches mißt, daß man die gemessene Temperatur mit der Solltemperatur vergleicht und daß man wenn nötig, ein Kühlfließmittel in die komprimierte Luft an jeder Leitung (15) einspritzt.

19. Verfahren nach Anspruch 18, dadurch gekennzeichnet, daß die Solltemperaturen an jeder Gießform (49) oder Gesamtheit von Gießformen identisch sind.

20. Verfahren nach Anspruch 18, dadurch gekennzeichnet, daß die Solltemperaturen an jeder Gießform (49) oder Gesamtheit von Gießformen unterschiedlich sind.

21. Verfahren nach einem der Ansprüche 18 bis 20, dadurch gekennzeichnet, daß die Messung der Temperatur (20) dadurch erfolgt, daß man die Temperatur der komprimierten Luft kurz vor ihrem Einspritzen um und/oder unter dem Wartetisch (50) mißt.

22. Verfahren nach einem der Ansprüche 18 bis 20, dadurch gekennzeichnet, daß die Temperaturmessung (20) dadurch erfolgt, daß man die Temperatur der komprimierten Luft über dem Wartetisch (50) mißt.

23. Verfahren nach einem der Ansprüche 13 bis 22, dadurch gekennzeichnet, daß die Temperatur der abgekühlten komprimierten Luft in der Zeit im wesentlichen konstant gehalten wird.

24. Verfahren nach einem der Ansprüche 13 bis 22, dadurch gekennzeichnet, daß die Temperatur der komprimierten Luft nur gesenkt wird zwischen im wesentlichen demjenigen Augenblick, wo der Glasgegenstand (48) über dem Wartetisch (50) ankommt, und demjenigen Augenblick, wo er diese Position verläßt.

25. Verfahren nach einem der Ansprüche 13 bis 24, dadurch gekennzeichnet, daß die komprimierte Luft einige Augenblicke vor der Ankunft des Glasgegenstandes (48) über dem Wartetisch (50) gekühlt wird.

## Claims

1. Process for manufacturing glass objects, comprising, in particular, a stage of supplying at least one mould (49) with a drop of glass in the viscous liquid state, a stage of forming the object in the mould, a stage of extracting and transporting the glass object (48), during which the glass object is still at a temperature high enough for it to be capable of deforming, followed by a stage of placing the glass object on a transfer surface (50, 51), **characterised in that,** during at least a part of the stage of extracting and transporting the glass object, a fluid with a temperature distinctly below ambient temperature is projected over at least a predetermined zone (56, 163) of the glass object (48), the flow of the fluid remaining below a limit value, above which the appearance of deformations in the glass object is noted.

2. Process according to claim 1, **characterised in that** the stage of extracting and transporting the glass object (48) comprises a waiting stage, during which at least the outer skin of the glass object is expected to reach a sufficiently low temperature in order to enable the glass object subsequently to be placed on the transfer surface (50, 51), and in that the fluid is projected over the glass object during the waiting stage.

3. Process according to claim 1 or 2, **characterised in that** it comprises a stage of projecting the fluid over the base (163) of the glass object (48).

4. Process according to one of claims 1 to 3, **characterised in that** it comprises a stage of projecting the fluid over the upper part of the glass object (48), namely a part such as the neck (56) of a bottle.

5. Process according to either claim 1 or 2, **characterised in that** it comprises a stage of projecting the fluid over the whole of the glass object (48).

6. Process according to one of claim 1 to 5, **characterised in that** the glass object is a hollow body of the bottle type (48), and in that it also compriser a stage of projecting the fluid over an internal surface of the hollow body.

7. Process according to claim 6, **characterised in that** the stage of projecting the fluid internally is carried out at the same time as at least one of the stages of projecting the fluid over the external surface of the hollow body (48).

8. Process according to claim 6 or 7, **characterised in that** the stage of projecting the fluid internally is carried out before or after at least one of the stages of projecting fluid over the external surface of the hollow body (48).

9. Process according to one of claims 1 to 8, **characterised in that** the temperature of the fluid is sufficiently low so that at least the predetermined zone (56, 163) of the glass object (48) undergoes a superficial tempering.

10. Process according to one of claims 1 to 9, **characterised in that** it comprises a stage of projecting the fluid at the part (163) of the glass object upon which this glass object is subsequently to rest on the transfer surface.

11. Process according to one of claims 1 to 10, **characterised in that** the fluid is a gas, such as air, at a temperature distinctly less than ambient temperature, or a mixture of gas and atomised cryogenic liquid.

12. Process according to one of claims 1 to 10, **characterised in that** the fluid is a cryogenic liquid (2) which is atomised (14) during the stage of projecting the fluid, so as to form a plurality of liquid or solid drops which remain at least partially in the liquid or solid phase, respectively, before reaching the surface of the glass object (48).

13. Process according to claim 11, **characterised in that** the fluid is air which is taken from a source of compressed gas (9) and placed in thermal exchange contact which a cryogenic fluid (2) so that the temperature of the said air is lowered to a desired temperature which is constant or variable in the course of a cycle and constant or variable on average in time over a large number of cycles.

14. Process according to claim 13, **characterised in that** the placing in contact is carried out by the passage of the compressed air into heat exchanger means (8).

15. Process according to claim 13, **characterised in that** the placing in contact is carried out by the injection (14) of cold gas into the compressed air in continuous and/or sequential manner.

16. Process according to claim 13, **characterised in that** the placing in contact is carried out by injection (14) of cryogenic fluid (2) into the compressed air, in continuous or sequential manner.

17. Process according to one of claims 13 or 16, **characterised in that** compressed air from all of the sections of a machine is cooled to the same temperature.

18. Process according to one of claims 13 to 17, **characterised in that** compressed air is brought around and/or under at least one waiting table (50) by separate pipes (15), in that the temperature (20) is measured in the region of the waiting table, in that the measured temperature is compared with the desired temperature, and in that, if necessary, a cooling fluid is injected into the compressed air at each pipe (15).

19. Process according to claim 18, **characterised in that** the desired temperatures at each mould (49) or assembly of moulds are identical.

20. Process according to claim 18, **characterised in that** the desired temperatures at each mould (49) or assembly of moulds are different.

21. Process according to one of claims 18 to 20, **characterised in that** the temperature measurement (20) is carried out by measuring the temperature of the compressed air just before it is injected around and/or under the waiting table (50).

22. Process according to one of claims 18 to 20, **characterised in that** the temperature measurement (20) is carried out by measuring the temperature of the compressed air above the waiting table (50).

23. Process according to one of claims 13 to 22, **characterised in that** the temperature of the cooled compressed air is kept substantially constant in time.

24. Process according to one of claims 13 to 22, **characterised in that** the temperature of the compressed air is only lowered between substantially the moment when the glass object (48) arrives above the waiting table (50) and the moment when it leaves this position.

25. Process according to one of claims 13 to 24, **characterised in that** the compressed air is cooled a few moments before the glass object (48) arrives above the waiting table (50).

FIG.1

Réservoir cryo.

L.N2

Echangeur cryo.

Air comprimé

G.N2

Air froid

Electro-vanne cryo.

REGULATEUR

Moule

Section 1

Section n

## FIG.2

REGULATEUR

L.N2

L.N2

L.N2

Réservoir cryo.

Air comprimé

Echangeur cryo.

Air froid

Electro-vanne cryo.

G.N2

Sonde de température

Air comprimé

1 SECTION DE MACHINE

Pince

EP 0 321 522 B1

**FIG. 3**

**FIG. 4**

FIG. 5

FIG. 6

# FIG.7A

# FIG.7B